# EUROPEAN PATENT APPLICATION

(11) **EP 4 342 622 A1**
(43) Date of publication of application: **27.03.2024**
(21) Application number: 21944213.4
(22) Date of filing: 04.06.2021
(51) Int. Cl.: B23K 26/34, B23K 26/21

(54) **PROCESSING MACHINE**

(71) Applicant: DMG Mori Co., Ltd., Yamatokoriyama-shi, Nara 639-1160 (JP)
(72) Inventor: OTAWA, Takeshi, Yamatokoriyama-shi, Nara 639-1160 (JP)
(74) Representative: Isarpatent
(86) International application number: PCT/JP2021/021445
(87) International publication number: WO 2022/254720

(57) **Abstract**

A processing machine includes: a tool spindle (121) provided swingably centered on a predetermined axis (104) in parallel with a horizontal direction; an additive manufacturing head (141) that can be attached to and detached from tool spindle (121), and performs work on the workpiece; a first connection part (211) that is provided for tool spindle (121) and additive manufacturing head (141), and connects tool spindle (121) and additive manufacturing head (141) to each other; and a second connection part (261) that is provided for tool spindle (121) and additive manufacturing head (141), is disposed at a position apart from first connection part (211), and connects tool spindle (121) and additive manufacturing head (141) to each other. First connection part (211) is disposed on one side with respect to a virtual plane (310) that includes a gravity center position (G) of additive manufacturing head (141) and predetermined axis (104), and second connection part (261) is disposed on the other side with respect to virtual plane (310).

## Description

### TECHNICAL FIELD

The present invention relates to a processing machine.

### BACKGROUND ART

For example, Japanese Patent Laying-Open No. 2017-1078 (PTL 1) discloses a processing machine that includes: a tool spindle that holds a tool for subtractive manufacturing for a workpiece; and an additive manufacturing head that is detachably attached to the tool spindle, and discharges material powder and emits laser light during additive manufacturing for a workpiece.

### CITATION LIST

### PATENT LITERATURE

PTL 1: Japanese Patent Laying-Open No. 2017-1078

### SUMMARY OF INVENTION

### TECHNICAL PROBLEM

The processing machine disclosed in PTL 1 is provided with a tool spindle (tool holding part) that is provided swingably centered on a swing central axis in parallel with the horizontal direction. According to such a configuration, when an additive manufacturing head (work head) attached to the tool spindle is swung integrally with the tool spindle during additive manufacturing for a workpiece, the additive manufacturing head possibly falls off the tool spindle.

Accordingly, an object of the present invention is to solve the problem described above, and is to provide a processing machine that prevents a work head attached to a tool holding part from falling off the tool holding part when work is performed for a workpiece by the work head.

### SOLUTION TO PROBLEM

A processing machine according to the present invention includes: a tool holding part that is provided swingably centered on a predetermined axis in parallel with a horizontal direction, and is for holding a tool for subtractive manufacturing for a workpiece; a work head that is detachably attached to the tool holding part, and performs work on the workpiece; a first connection part that is provided for the tool holding part and the work head, and connects the tool holding part and the work head to each other; and a second connection part that is provided for the tool holding part and the work head, is disposed at a position apart from the first connection part, and connects the tool holding part and the work head to each other. The first connection part is disposed on one side with respect to a virtual plane that includes a gravity center position of the work head and the predetermined axis, and the second connection part is disposed on the other side with respect to the virtual plane.

According to the processing machine having such a configuration, it can be assumed that when the tool holding part is swung centered on the predetermined axis, a centrifugal force in a direction in parallel with the virtual plane including the gravity center position of the work head and the predetermined axis is applied to the work head attached to the tool holding part at the gravity center position of the work head as a point mass. In this case, the first connection part and the second connection part that connect to the tool holding part and the work head to each other are respectively disposed on the one side and the other side with the virtual plane intervening therebetween. Accordingly, the centrifugal force caused at the work head when the tool holding part is swung can be received in a balanced manner on both the sides with the gravity center position of the work head intervening therebetween, and the weight of the work head itself can be received in a balanced manner on both the sides with the gravity center position of the work head intervening therebetween. Accordingly, when work is performed for a workpiece by the work head attached to the tool holding part, the work head can be prevented from falling off the tool holding part.

Preferably, in view of an axial direction of the predetermined axis, the gravity center position of the work head is disposed on a virtual line connecting the first connection part and the second connection part to each other between the first connection part and the second connection part.

According to the processing machine having such a configuration, the centrifugal force caused when the tool holding part is swung can be received in a balanced manner on both the sides with the gravity center position of the work head intervening therebetween. Accordingly, the work head can be more securely prevented from falling off the tool holding part.

Preferably, one of the tool holding part and the work head is provided with a pin insertion hole. The other of the tool holding part and the work head is provided with a pin member that is inserted into the pin insertion hole and forms the first connection part together with the pin insertion hole when the work head is attached to the tool holding part. The insertion direction of the pin member into the pin insertion hole is in parallel with the predetermined axis.

According to the processing machine having such a configuration, the direction of the centrifugal force caused when the tool holding part is swung, and the insertion direction of the pin member into the pin insertion hole have an orthogonal relationship. Accordingly, the work head can be more securely prevented from falling off the tool holding part.

Preferably, the tool holding part is provided with a tool insertion hole into which a tool is inserted. The tool holding part includes a tool clamp mechanism for clamping the tool inserted into the tool insertion hole. The work head is provided with a shank part that is inserted into the tool insertion hole, is clamped by the tool clamp mechanism, and forms the second connection part together with the tool insertion hole, when the work head is attached to the tool holding part.

According to the processing machine having such a configuration, at the second connection part, the tool clamp mechanism for clamping a tool is used. Accordingly, the work head can be more securely prevented from falling off the tool holding part.

Preferably, the work head is an additive manufacturing head that emits laser light while discharging material powder to the workpiece.

According to the processing machine having such a configuration, when the additive manufacturing is performed for a workpiece by the additive manufacturing head attached to the tool holding part, the additive manufacturing head can be prevented from falling off the tool holding part.

### ADVANTAGEOUS EFFECTS OF INVENTION

As described above, according to the present invention, the processing machine that prevents the work head attached to the tool holding part from falling off the tool holding part when work is performed for a workpiece by the work head can be provided.

### BRIEF DESCRIPTION OF DRAWINGS

Fig. 1 is a front view showing a processing machine in an embodiment of the present invention.
Fig. 2 is a perspective view showing a tool spindle, and an additive manufacturing head attached to the tool spindle.
Fig. 3 is a front view showing the tool spindle and the additive manufacturing head in Fig. 2.
Fig. 4 is a perspective view showing the tool spindle.
Fig. 5 is a front view showing the tool spindle in Fig. 4.
Fig. 6 is a perspective view showing the additive manufacturing head.
Fig. 7 is a front view showing the additive manufacturing head in Fig. 6.
Fig. 8 is a top view showing the additive manufacturing head in Fig. 6.
Fig. 9 is a partial sectional view illustrating a connection structure of the tool spindle and the additive manufacturing head.
Fig. 10 is a sectional view showing the tool spindle and the additive manufacturing head taken along line X-X in Fig. 2.
Fig. 11 is a sectional view showing the tool spindle and the additive manufacturing head surrounded by two-dot chain line XI in Fig. 9.
Fig. 12 is a front view showing a modification example of the tool spindle and the additive manufacturing head in Fig. 3.

### DESCRIPTION OF EMBODIMENTS

Referring to the drawings, embodiments of the present invention are described. Note that in the drawings to be referred to below, the identical or equivalent members are assigned the same numbers.

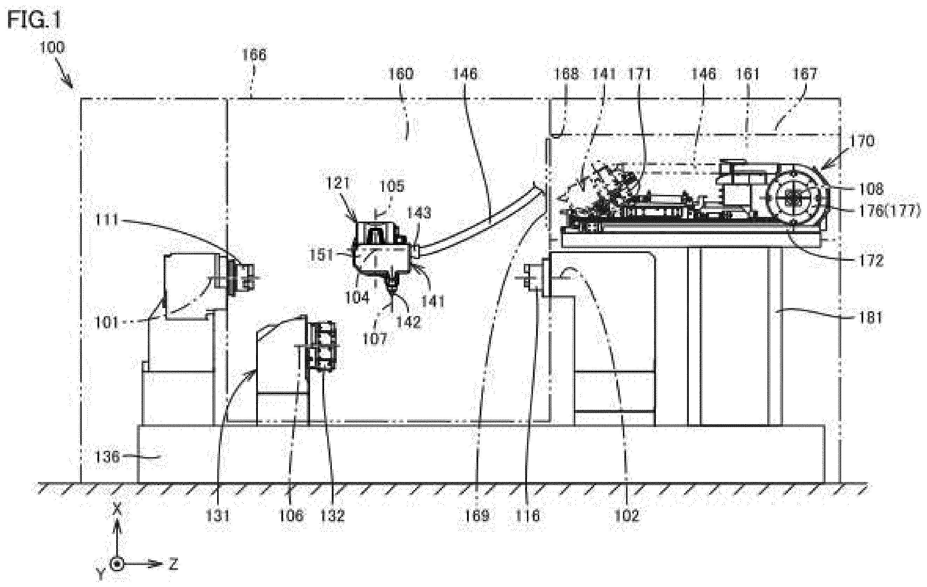

Fig. 1 is a front view showing a processing machine in an embodiment of the present invention. In Fig. 1, with a transparent view through a cover body forming an appearance of the processing machine, the inside of the processing machine is shown.

Referring to Fig. 1, a processing machine 100 is an AM/SM hybrid processing machine capable of additive manufacturing processing for a workpiece and subtractive manufacturing processing (cutting machining) for a workpiece. Processing machine 100 has a turning function using a fixed tool, and a milling function using a rotating tool, as SM processing functions.

Processing machine 100 is an NC (Numerically Controlled) processing machine where various operations for workpiece processing are automated by numerical control by a computer.

Note that in this Description, an axis that is in parallel with the lateral direction (width direction) of processing machine 100 and extends in the horizontal direction is called "Z-axis", an axis that is in parallel with the front-back direction (depth direction) of processing machine 100 and extends in the horizontal direction is called "Y-axis", and an axis extending in the vertical direction is called "X-axis". The X-axis, the Y-axis, and the Z-axis are three axes that are orthogonal to each other. The right direction in Fig. 1 is called "+Z-axis direction", and the left direction is called "-Z-axis direction". The front direction on the sheet of Fig. 1 is called "+Y-axis direction", and the depth direction is called "-Y-axis direction". The upper direction in Fig. 1 is called "+X-axis direction", and the lower direction is called "-X-axis direction".

First, the entire structure of processing machine 100 is described. Processing machine 100 includes a cover body 166. Cover body 166 forms a machining area 160, and presents an appearance of the processing machine 100.

Machining area 160 is a space in which a workpiece is processed, and is hermetically closed so as to prevent chips and coolant (mist) accompanying the subtractive manufacturing for the workpiece, and fumes accompanying the additive manufacturing for the workpiece from leaking to the outside of machining area 160.

Processing machine 100 includes a bed 136, a first workpiece spindle 111, a second workpiece spindle 116, a tool spindle 121, and a tool rest 131.

Bed 136 is a base member for supporting first workpiece spindle 111, second workpiece spindle 116, tool spindle 121, tool rest 131 and the like, and is installed on a floor surface of a factory or the like.

First workpiece spindle 111 and second workpiece spindle 116 are arranged opposite to each other in the Z-axis direction. The workpiece spindles that are first workpiece spindle 111 and second workpiece spindle 116 can hold a workpiece. Each of the workpiece spindles that are first workpiece spindle 111 and second workpiece spindle 116 are provided with a chuck mechanism (not shown) for detachably holding a workpiece. First workpiece spindle 111 rotates a held workpiece centered on a rotation central axis 101 in parallel with the Z-axis. Second workpiece spindle 116 rotates a held workpiece centered on a rotation central axis 102 in parallel with the Z-axis.

First workpiece spindle 111 is fixed to bed 136. Second workpiece spindle 116 is provided movably in the Z-axis direction by any of various feeding mechanisms, guide mechanisms, servomotors and the like. Second workpiece spindle 116 may have a configuration fixed to bed 136.

Note that instead of second workpiece spindle 116, a tailstock for supporting the rotation center of a workpiece held at first workpiece spindle 111 may be provided, or a workpiece steady rest for supporting the workpiece held at first workpiece spindle 111 from the outer periphery and for preventing the workpiece from oscillating.

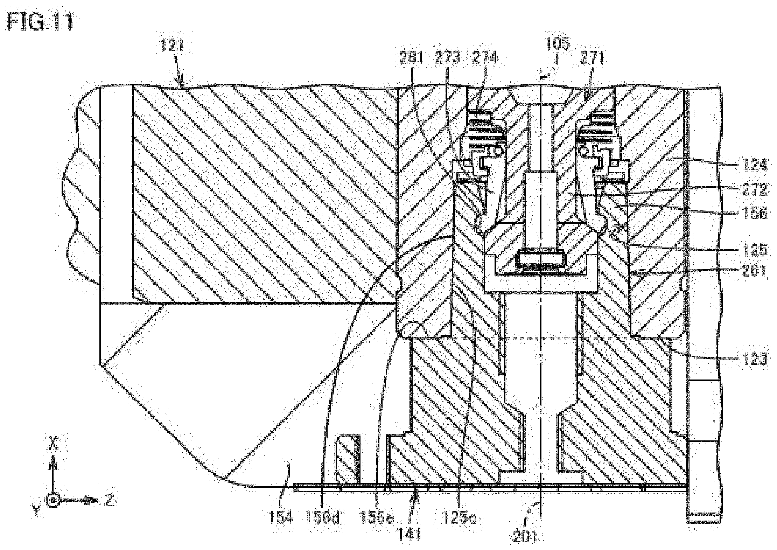

Tool spindle 121 is provided in machining area 160. Tool spindle 121 can hold a tool for the subtractive manufacturing for a workpiece. Tool spindle 121 can hold a rotating tool for a workpiece milling process. Tool spindle 121 is provided with a tool clamp mechanism 271 (see Fig. 11 described later) for detachably holding a tool. When the workpiece milling process is performed using the rotating tool, tool spindle 121 rotates the held rotating tool centered on a rotation central axis 105 in parallel with the X- and Z-axes plane.

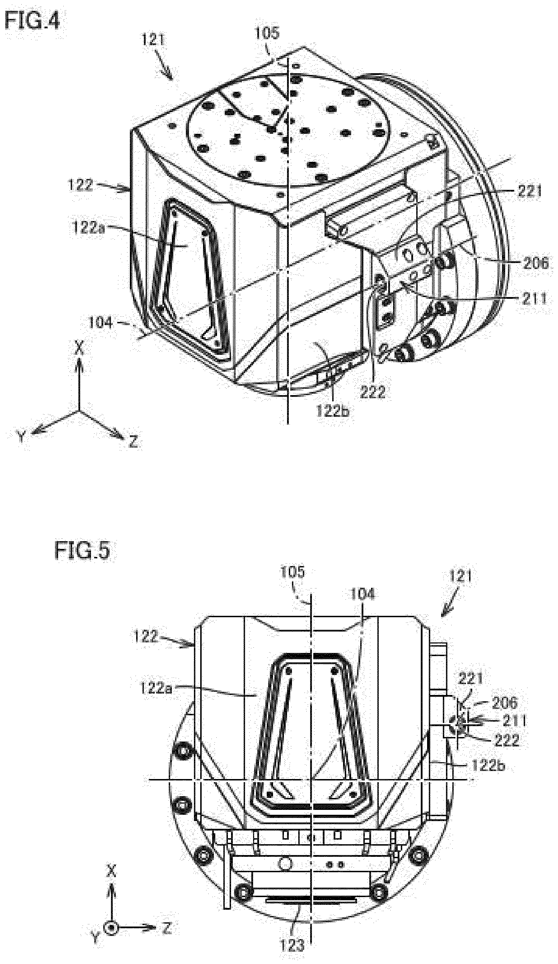

Furthermore, tool spindle 121 can swing (B-axis swing) centered on a predetermined axis 104 in parallel with the horizontal direction. Predetermined axis 104 is in parallel with the Y-axis. Preferably, the swing range of tool spindle 121 is ±90° or more with respect to a reference posture (posture shown in Fig. 1) where a spindle end face 123 (see Fig. 5 described later) of tool spindle 121 is oriented downward. The swing range of tool spindle 121 may be a range of ±90° with respect to the reference posture, or a range of ±120°.

Tool spindle 121 is supported above bed 136 by a column or the like, not shown. Tool spindle 121 is movable in the X-axis direction, the Y-axis direction, and the Z-axis direction by various feeding mechanisms, guide mechanisms, servomotors and the like provided at the column or the like. The processing position by the rotating tool attached to tool spindle 121 is three-dimensionally moved.

Although not shown in Fig. 1, around first workpiece spindle 111 there are provided an automatic tool changer (ATC) for automatically changing a tool held by tool spindle 121, and a tool magazine that stores tools that are each to be replaced and held by tool spindle 121.

A plurality of fixed tools for a turning process are attached to tool rest 131. The tool rest 131 has what is called a turret shape, allows the fixed tools to be radially attached thereto, and performs swing division.

More specifically, tool rest 131 includes a swing part 132. Swing part 132 can swing centered on a swing central axis 106 in parallel with the Z-axis. At a position apart by a gap in the circumferential direction centered on swing central axis 106, a tool holder for holding the fixed tool is attached. By rotation of swing part 132 centered on swing central axis 106, the fixed tool held by the tool holder moves in the circumferential direction, and the fixed tool used for the turning process is divided.

Tool rest 131 is supported above bed 136 by a saddle or the like, not shown. Tool rest 131 is movable in the X-axis direction and the Z-axis direction by various feeding mechanisms, guide mechanisms, servomotors and the like provided at the saddle or the like. Tool rest 131 may have a milling function of rotating the rotating tool.

Processing machine 100 further includes an additive manufacturing head 141, a powder feeder and a laser oscillating device (not shown), and a cable 146.

Additive manufacturing head 141 performs work on the workpiece. Additive manufacturing head 141 discharges powder (material powder) to the workpiece, and emits laser light, thereby performing the additive manufacturing (directed energy deposition method). Metal powder, such as of stainless steel, nickel-based alloy, cobalt -base alloy, or titanium, may be used as the powder. Note that the powder is not necessarily metal powder.

Additive manufacturing head 141 is detachably provided for tool spindle 121. In the additive manufacturing for a workpiece, additive manufacturing head 141 is attached to tool spindle 121, is thus integrated with tool spindle 121, moves in the X-axis direction, the Y-axis direction, and the Z-axis direction, and swings centered on predetermined axis 104. In the subtractive manufacturing for a workpiece, additive manufacturing head 141 is separated from tool spindle 121, and is stored in a head stocker 170 described later.

The powder feeder and the laser oscillating device are provided outside of processing machine 100. The powder feeder feeds powder to be used for the additive manufacturing, toward additive manufacturing head 141. The laser oscillating device oscillates laser light to be used for the additive manufacturing.

Cable 146 extends from additive manufacturing head 141, and is connected to the powder feeder and the laser oscillating device. Cable 146 supplies powder from the powder feeder to additive manufacturing head 141, and supplies laser light from the laser oscillating device to additive manufacturing head 141. Cable 146 includes an optical fiber for guiding laser light, a pipe for guiding powder, an air tube serving as a flow path of air, a gas pipe serving as a flow path of inert gas, a cooling pipe serving as a flow path of refrigerant, electrical wiring, and a flexible tube that stores them. Cable 146 has flexibility.

Additive manufacturing head 141 includes a head main body 151, and a laser tool 142. Laser light and powder are introduced into head main body 151 through cable 146. Head main body 151 internally includes various optical components, such as mirrors for guiding the laser light toward laser tool 142, and a collimating lens for converting the laser light into parallel light.

Head main body 151 is provided with a cable guide part 143. Cable guide part 143 has a cylindrical shape, and allows cable 146 to be inserted therein. Cable guide part 143 guides cable 146 into head main body 151.

Laser tool 142 is attached to head main body 151. Laser tool 142 emits laser light toward the workpiece, and defines a laser light irradiation region on the workpiece. Laser tool 142 may include a condenser lens. An optical axis 107 of laser light emitted from laser tool 142 toward the workpiece extends in parallel with rotation central axis 105 of tool spindle 121. Laser tool 142 is provided with a nozzle hole for discharging powder toward the workpiece. Note that additive manufacturing head 141 may have a configuration of discharging powder through a nozzle having a pipe shape.

Processing machine 100 may include a plurality of laser tools 142 that have varying shapes and/or sizes of laser light irradiation regions defined on the workpiece. In this case, any one laser tool 142 may be selected among laser tools 142 in accordance with a condition of additive manufacturing to be executed, and be attached to head main body 151.

Cover body 166 further forms a storage area 161. Storage area 161 is provided in the Z-axis direction alongside machining area 160. Storage area 161 is provided above second workpiece spindle 116.

Cover body 166 further includes an inner cover 167, and an opening and closing cover 169. Inner cover 167 forms storage area 161. Inner cover 167 is provided with an opening part 168. Opening part 168 is made up of an opening that causes machining area 160 and storage area 161 to communicate with each other. Opening and closing cover 169 is provided at opening part 168. Opening and closing cover 169 is provided so as to be capable of operating between a closed state in which opening part 168 is blocked, and an open state in which opening part 168 is open.

Processing machine 100 further includes head stocker 170, and a head stocker support stage 181. Head stocker 170 is provided in storage area 161. Head stocker support stage 181 is provided to stand on bed 136. Head stocker 170 is supported above second workpiece spindle 116 by head stocker support stage 181. In the subtractive manufacturing for the workpiece, head stocker 170 stores additive manufacturing head 141 in storage area 161.

Head stocker 170 includes a head holding part 171, a base 172, and a cable support part 176.

Head holding part 171 detachably holds additive manufacturing head 141. Opening and closing cover 169 is operated in the open state during transition between the subtractive manufacturing and the additive manufacturing for a workpiece. During transition from the subtractive manufacturing to the additive manufacturing for a workpiece, additive manufacturing head 141 is delivered from tool spindle 121 to cable support part 176, and is stored in storage area 161 through opening part 168. During transition from the additive manufacturing to the subtractive manufacturing for a workpiece, additive manufacturing head 141 enters machining area 160 through opening part 168, and is delivered from cable support part 176 to tool spindle 121.

Base 172 is made up of a plate member disposed in parallel with the Y- and Z-axes plane. Base 172 mounts head holding part 171 and cable support part 176.

Cable support part 176 supports cable 146 extending from additive manufacturing head 141. Cable support part 176 includes a pulley part 177. Pulley part 177 is provided so as to be rotatable centered on a rotation central axis 108 in parallel with the Y-axis direction, and be slidable in the Z-axis direction. A tensile force (elastic force) from machining area 160 toward storage area 161 is applied to pulley part 177 by a spring member, not shown. The tensile force in a direction (+Z-axis direction) away from additive manufacturing head 141 in machining area 160 in the Z-axis direction is applied to pulley part 177.

Cable 146 extending from additive manufacturing head 141 extends in the +Z-axis direction above base 172. Cable 146 is wound around pulley part 177, is inverted by 180°, and extends in the -Z-axis direction. The distal end of cable 146 extending in the -Z-axis direction is supported by base 172.

According to such a configuration, the deflection of cable 146 in machining area 160 can be prevented. By slide movement of pulley part 177 in the Z-axis direction, the length of cable 146 in machining area 160 can be automatically adjusted in accordance with the position of additive manufacturing head 141.

Subsequently, more specific structures of tool spindle 121 and additive manufacturing head 141, and a connection structure of tool spindle 121 and additive manufacturing head 141 are described.

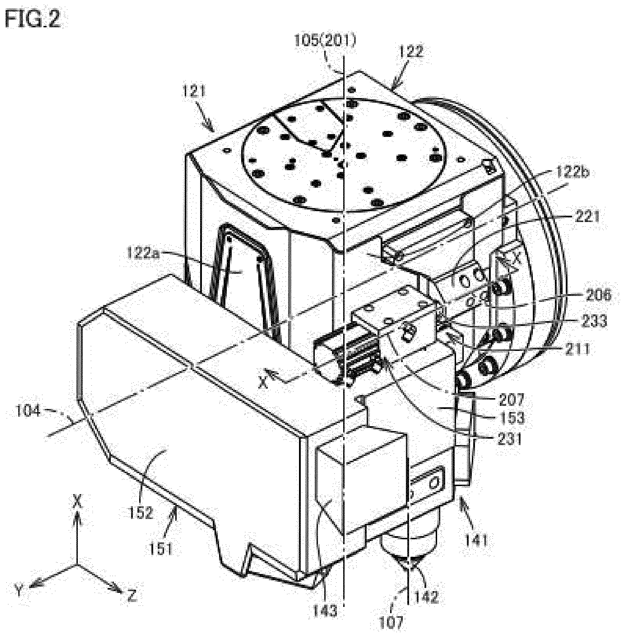

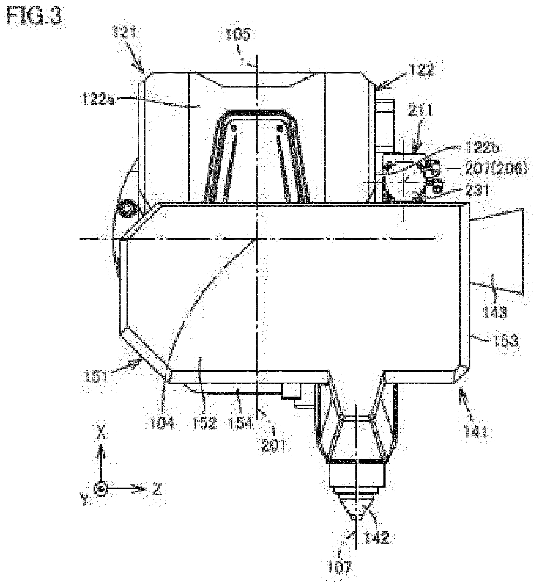

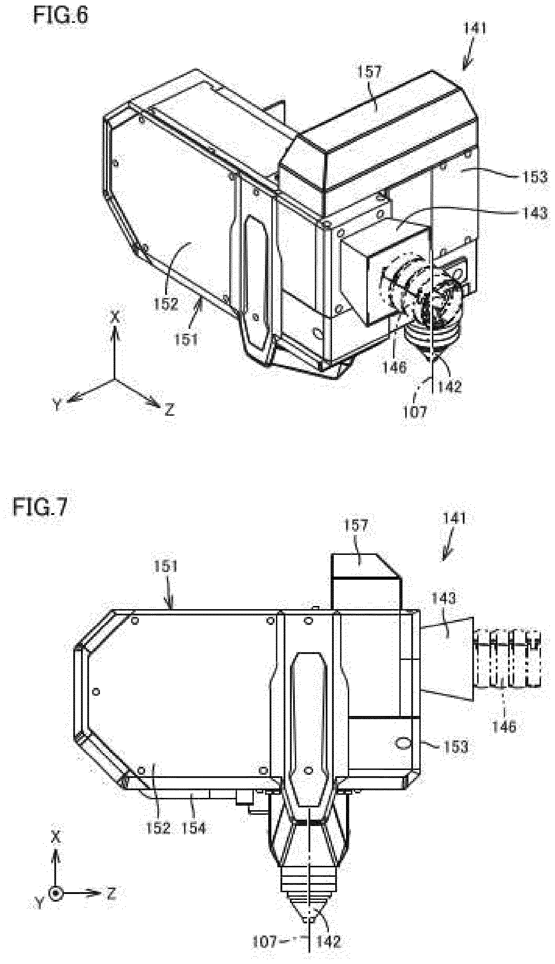

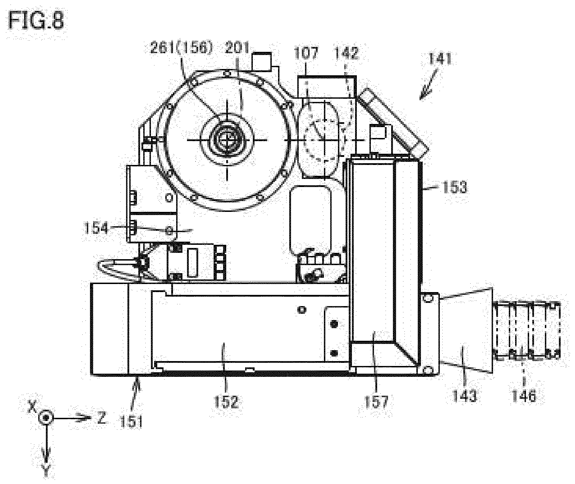

Fig. 2 is a perspective view showing the tool spindle, and the additive manufacturing head attached to the tool spindle. Fig. 3 is a front view showing the tool spindle and the additive manufacturing head in Fig. 2. Fig. 4 is a perspective view showing the tool spindle. Fig. 5 is a front view showing the tool spindle in Fig. 4. Fig. 6 is a perspective view showing the additive manufacturing head. Fig. 7 is a front view showing the additive manufacturing head in Fig. 6. Fig. 8 is a top view showing the additive manufacturing head in Fig. 6.

Note that Figs. 2 to 8, and Figs. 9 to 11 described later show tool spindle 121 with a reference posture, and additive manufacturing head 141 attached to tool spindle 121, with three axes that are X-, Y-, and Z-axes. Hereinafter, with reference to the X-, Y-, and Z-axes with the reference posture, the structures of tool spindle 121 and additive manufacturing head 141 are described.

Referring to Figs. 2 to 8, tool spindle 121 includes an exterior body 122, and a spindle main body 124 (see Fig. 11 described later).

Exterior body 122 forms an appearance of tool spindle 121. Exterior body 122 has a rectangular parallelepiped shape. Exterior body 122 includes a first side surface 122a, and a second side surface 122b.

As shown in Figs. 4 and 5, first side surface 122a is oriented in the +Y-axis direction. First side surface 122a is disposed in parallel with the Y- and Z-axes plane. Predetermined axis 104 intersects with first side surface 122a. Second side surface 122b is provided at a position apart outward from predetermined axis 104 in the radial direction. Second side surface 122b is made up of a plane in parallel with rotation central axis 105 and predetermined axis 104. Second side surface 122b is oriented outward from predetermined axis 104 in the radial direction. Second side surface 122b moves in the circumferential direction of predetermined axis 104 accompanying the swing operation of tool spindle 121 centered on predetermined axis 104.

As shown in Fig. 5, and Fig. 11 described later, spindle main body 124 is internally provided in exterior body 122. Spindle main body 124 is made up of a cylindrical body extending in the axial direction of rotation central axis 105. Spindle main body 124 is supported rotatably centered on rotation central axis 105.

Spindle main body 124 includes a spindle end face 123. Spindle end face 123 is disposed at an end of spindle main body 124 in the axial direction of rotation central axis 105. Spindle end face 123 is provided at a position apart outward from predetermined axis 104 in the radial direction. Spindle end face 123 is made up of a plane that is orthogonal to rotation central axis 105, and is in parallel with predetermined axis 104. Spindle end face 123 has a ring shape centered on rotation central axis 105. Spindle end face 123 moves in the circumferential direction of predetermined axis 104 accompanying the swing operation of tool spindle 121 centered on predetermined axis 104.

Additive manufacturing head 141 (head main body 151) includes a first side part 152, a second side part 153, and a bottom part 154.

As shown in Fig. 8, in view of additive manufacturing head 141 in the X-axis direction, first side part 152 is provided at a position apart from optical axis 107 in the +Y-axis direction. First side part 152 has a block shape which is disposed in parallel with the X- and Z-axes plane and of which thickness direction is the Y-axis direction. Second side part 153 is provided at a position apart from optical axis 107 in the +Z-axis direction and the +Y-axis direction. Second side part 153 has a block shape which is disposed in parallel with the X- and Y-axes plane and of which thickness direction is the Z-axis direction. An end of second side part 153 in the +Y-axis direction forms a corner part integrally with an end of first side part 152 in the +Z-axis direction.

Cable guide part 143 is connected to the corner part formed by first side part 152 and second side part 153. Cable guide part 143 is open in the +Z-axis direction.

Bottom part 154 has a block shape which is disposed in parallel with the Y- and Z-axes plane and of which thickness direction is the X-axis direction. An end of bottom part 154 in the +Y-axis direction forms a corner part integrally with an end of first side part 152 in the -X-axis direction. An end of bottom part 154 in the +Z-axis direction forms a corner part integrally with an end of second side part 153 in the -X-axis direction. An end of bottom part 154 in the +Z-axis direction and the +Y-axis direction forms an apical part integrally with an end of first side part 152 in the +Z-axis direction and -X-axis direction and an end of second side part 153 in the +Y-axis direction and -X-axis direction.

Laser tool 142 is attached to bottom part 154. Laser tool 142 is provided so as to protrude from bottom part 154 in the -X-axis direction.

In a state where additive manufacturing head 141 is attached to tool spindle 121, first side surface 122a and first side part 152 are opposite to each other in the Y-axis direction, second side surface 122b and second side part 153 are opposite to each other in the Z-axis direction, and spindle end face 123 and bottom part 154 are opposite to each other in the X-axis direction.

In a state where additive manufacturing head 141 is attached to tool spindle 121, predetermined axis 104 of tool spindle 121 extending in the Y-axis direction intersects with first side part 152 of additive manufacturing head 141. Rotation central axis 105 of tool spindle 121 extending in the X-axis direction intersects with bottom part 154 of additive manufacturing head 141. Optical axis 107 of additive manufacturing head 141 extending in the X-axis direction intersects with exterior body 122.

As shown in Figs. 6 to 8, additive manufacturing head 141 further includes a cylinder cover 157. Cylinder cover 157 is attached to the end of second side part 153 in the +X-axis direction. Cylinder cover 157 is provided so as to cover a piston cylinder 231, described later.

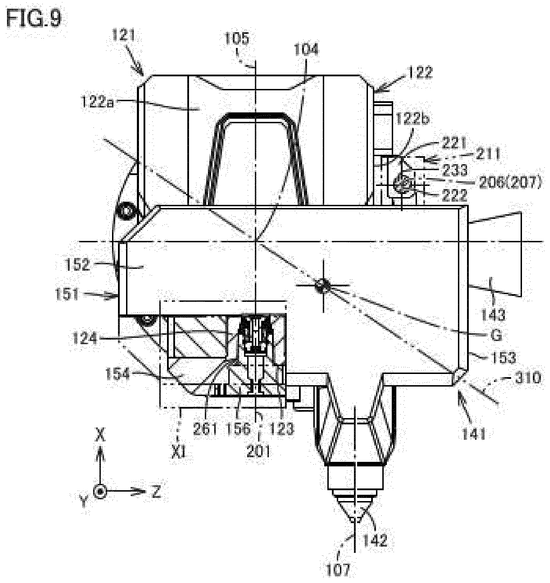

Note that since depiction of cylinder cover 157 is omitted in Figs. 2 and 3, the internal structure in cylinder cover 157 is shown. In Fig. 9 described later, depiction of cylinder cover 157 and its internal structure is omitted.

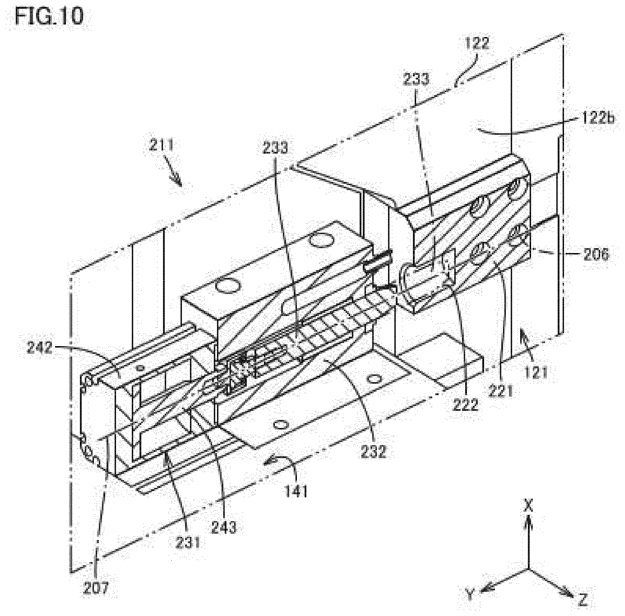

Fig. 9 is a partial sectional view illustrating a connection structure of the tool spindle and the additive manufacturing head. Fig. 10 is a sectional view showing the tool spindle and the additive manufacturing head taken along line X-X in Fig. 2. Fig. 11 is a sectional view showing the tool spindle and the additive manufacturing head surrounded by two-dot chain line XI in Fig. 9.

Referring to Figs. 9 and 10, processing machine 100 further includes a first connection part 211. First connection part 211 is provided for tool spindle 121 and additive manufacturing head 141. First connection part 211 is configured to connect tool spindle 121 and additive manufacturing head 141 to each other.

As shown in Fig. 10, tool spindle 121 further includes a block body 221. Block body 221 is attached to exterior body 122. Block body 221 is provided so as to protrude from second side surface 122b of exterior body 122. Block body 221 is provided above second side part 153 of additive manufacturing head 141.

Block body 221 is provided with a pin insertion hole 222. Pin insertion hole 222 has a concave shape that is concave in the Y-axis direction. Pin insertion hole 222 is open in the +Y-axis direction in block body 221. Pin insertion hole 222 is axially provided on a central axis 206 in parallel with the Y-axis direction. With reference to a section of block body 221 by a plane orthogonal to central axis 206, pin insertion hole 222 has a circular opening shape.

Additive manufacturing head 141 further includes piston cylinder 231. Piston cylinder 231 is attached to the end of second side part 153 in the +X-axis direction. Piston cylinder 231 is provided at a position opposite to block body 221 in the Y-axis direction.

Piston cylinder 231 includes a cylinder block 242, a piston 243, a pin member 233, and a guide block 232. Cylinder block 242 supports piston 243 slidably in the Y-axis direction. By supplying cylinder block 242 with a fluid pressure, such as a hydraulic pressure or a pneumatic pressure, piston 243 slides in any of the +Y-axis direction and the -Y-axis direction.

Guide block 232 is provided alongside cylinder block 242 in the Y-axis direction. Guide block 232 is disposed between cylinder block 242 and block body 221 in the Y-axis direction. Guide block 232 supports pin member 233 slidably in the Y-axis direction.

Pin member 233 has a pin shape extending in the Y-axis direction. Pin member 233 axially extends in a central axis 207. In a case where additive manufacturing head 141 is attached to tool spindle 121, central axis 207 is arranged on the same line as central axis 206.

Pin member 233 is provided so as to face pin insertion hole 222 in the Y-axis direction. Pin member 233 has a convex shape extending in the -Y-axis direction. With reference to a section of pin member 233 by a plane orthogonal to central axis 207, pin member 233 has a sectional shape corresponding to pin insertion hole 222. Pin member 233 has a circular sectional shape.

Pin member 233 is connected to piston 243. An end of pin member 233 in the +Y-axis direction is connected to an end of piston 243 in the -Y-axis direction. Pin member 233 slides in the Y-axis direction integrally with piston 243.

According to such a configuration, first connection part 211 includes pin insertion hole 222 and pin member 233. When additive manufacturing head 141 is attached to tool spindle 121, a fluid pressure is supplied to cylinder block 242, thereby allowing piston 243 to slide in the -Y-axis direction. Pin member 233 slides in the -Y-axis direction together with piston 243, and is thus inserted into pin insertion hole 222. Accordingly, tool spindle 121 and additive manufacturing head 141 are connected to each other by first connection part 211.

The insertion direction of pin member 233 into pin insertion hole 222 is the Y-axis direction (-Y-axis direction) in parallel with predetermined axis 104.

On the other hand, when additive manufacturing head 141 is detached from tool spindle 121, a fluid pressure is supplied to cylinder block 242, thereby allowing piston 243 to slide in the +Y-axis direction. Pin 233 slides in the +Y-axis direction together with piston 243, and is thus pulled out from pin insertion hole 222. Accordingly, the connection between tool spindle 121 and additive manufacturing head 141 by first connection part 211 is released.

Referring to Figs. 9 and 11, processing machine 100 further includes a second connection part 261. Second connection part 261 is provided for tool spindle 121 and additive manufacturing head 141. Second connection part 261 is disposed at a position apart from first connection part 211. Second connection part 261 is configured to connect tool spindle 121 and additive manufacturing head 141 to each other.

As shown in Fig. 11, tool spindle 121 (spindle main body 124) is provided with a tool insertion hole 125. Tool insertion hole 125 has a concave shape that is concave in the axial direction of rotation central axis 105. Tool insertion hole 125 is open at spindle end face 123. When a tool is attached to tool spindle 121 in the subtractive manufacturing for a workpiece, the (shank part of) tool is inserted into tool insertion hole 125.

Tool insertion hole 125 defines a taper surface 125c. Taper surface 125c is made up of the inner circumferential surface of spindle main body 124 centered on rotation central axis 105. The diameter of taper surface 125c decreases as being away from spindle end face 123 in the axial direction of rotation central axis 105.

Tool spindle 121 further includes tool clamp mechanism 271. Tool clamp mechanism 271 is provided for spindle main body 124. Tool clamp mechanism 271 is a mechanism for holding the tool at tool spindle 121 in the subtractive manufacturing for a workpiece. Tool clamp mechanism 271 can operate between a clamping state in which the tool is clamped, and an unclamping state in which the tool is unclamped. In this embodiment, the shank specification of a tool that can be held by tool clamp mechanism 271 is a polygon taper shank.

As shown in Figs. 8 and 11, additive manufacturing head 141 further includes a shank part 156.

Shank part 156 is provided for bottom part 154. Shank part 156 is provided so as to protrude from bottom part 154 in the +X-axis direction. Shank part 156 is axially provided on a central axis 201. In the case where additive manufacturing head 141 is attached to tool spindle 121, central axis 201 is arranged on the same line as rotation central axis 105. Central axis 201 is arranged at a position away from optical axis 107 in the -Z-axis direction. Central axis 201 and optical axis 107 are aligned in the Y-axis direction. Note that central axis 201 and optical axis 107 may be arranged at positions deviating from each other in the Y-axis direction.

Shank part 156 has a shank shape corresponding to the shank specification (polygon taper shank) of the tool that can be held by tool clamp mechanism 271.

More specifically, shank part 156 has a cylindrical shape centered on central axis 201, and the inner circumferential surface is provided with a concave part 281 that is concave toward the outside of rotation central axis 105 in the radial direction. Shank part 156 includes a taper surface 156d, and a shank end face 156e. Taper surface 156d is made up of an outer circumferential surface of shank part 156 centered on rotation central axis 105. Taper surface 156d has a taper shape corresponding to taper surface 125c. Shank end face 156e is made up of a plane orthogonal to central axis 201. Shank end face 156e has a ring shape centered on central axis 201.

Shank part 156 is inserted into tool insertion hole 125. The insertion direction of shank part 156 into tool insertion hole 125 is the radial direction of predetermined axis 104 (the axial direction of rotation central axis 105). In the clamping state of shank part 156 by tool clamp mechanism 271, taper surface 156d is in contact with taper surface 125c, and shank end face 156e is in contact with spindle end face 123.

Tool clamp mechanism 271 includes a drawbar 272, a collet 273, a spring member 274, and an unclamping cylinder (not shown).

Drawbar 272 is axially provided on rotation central axis 105. Drawbar 272 is provided slidably movable in the axial direction of rotation central axis 105 (in the axial direction of rotation central axis 105, a side on which spindle end face 123 is positioned is called "front side", and the opposite side is called "rear side").

Collet 273 is attached to a front end of drawbar 272. Collet 273 is disposed in shank part 156 that has a cylindrical shape. Collet 273 deforms so as to reduce and increase the diameter centered on rotation central axis 105 as drawbar 272 slides in the axial direction of rotation central axis 105. Spring member 274 is provided on the periphery of drawbar 272. Spring member 274 applies, to drawbar 272, an elastic force toward the rear side in the axial direction of rotation central axis 105. The unclamping cylinder is provided at the rear end of drawbar 272. The unclamping cylinder is supplied with a hydraulic pressure, thereby operating so as to allow drawbar 272 to slide to the front side in the axial direction of rotation central axis 105.

According to such a configuration, second connection part 261 includes tool insertion hole 125, and shank part 156. When additive manufacturing head 141 is attached to tool spindle 121, the elastic force of spring member 274 slides drawbar 272 to the rear side in the axial direction of rotation central axis 105. As drawbar 272 slides, collet 273 deforms so as to increase the diameter centered on rotation central axis 105, and is engaged with concave part 281. Collet 273 draws shank part 156 to the rear side in the axial direction of rotation central axis 105, thereby achieving the clamping state of shank part 156 by tool clamp mechanism 271. Accordingly, tool spindle 121 and additive manufacturing head 141 are connected to each other by second connection part 261.

On the other hand, when additive manufacturing head 141 is detached from tool spindle 121, a hydraulic pressure is applied to the unclamping cylinder, thereby sliding drawbar 272 to the front side in the axial direction of rotation central axis 105. As drawbar 272 slides, collet 273 deforms so as to reduce the diameter centered on rotation central axis 105, and the engagement of collet 273 with concave part 281 is released. Drawbar 272 pushes shank part 156 to the front side in the axial direction of rotation central axis 105, thereby achieving the unclamping state of shank part 156 by tool clamp mechanism 271. Accordingly, the connection between tool spindle 121 and additive manufacturing head 141 by second connection part 261 is released.

Note that the shank specification of the tool that can be held by the tool clamp mechanism according to the present invention is not limited to the polygon taper shank, and may be a hollow taper shank, for example.

Referring to Fig. 9, first connection part 211 is disposed on one side with respect to a virtual plane 310 that includes a gravity center position G of additive manufacturing head 141 and predetermined axis 104, and second connection part 261 is disposed on the other side with respect to virtual plane 310. Predetermined axis 104 extends on virtual plane 310. In view of the axial direction of predetermined axis 104, gravity center position G of additive manufacturing head 141 is overlaid on virtual plane 310.

Gravity center position G is the gravity center position of additive manufacturing head 141 itself in a state of being separated from tool spindle 121.

In view of tool spindle 121 and additive manufacturing head 141 in the axial direction of predetermined axis 104, gravity center position G of additive manufacturing head 141 is disposed at a position deviating from predetermined axis 104 in the +Z-axis direction and -X-axis direction. Gravity center position G is disposed at a position overlaid on first side part 152. Gravity center position G is disposed at a position that deviates from second side part 153 in the -Z-axis direction and deviates from bottom part 154 in the +X-axis direction. Gravity center position G is disposed between first connection part 211 and second connection part 261 in the X-axis direction (vertical direction). Gravity center position G is disposed between first connection part 211 and second connection part 261 in the Z-axis direction (horizontal direction).

Gravity center position G may be identified by entering, into a computer, the shape of additive manufacturing head 141 and the weights of components of additive manufacturing head 141, and by the FEM (Finite Element Method) analysis. The identification of gravity center position G is not limited to analysis by the computer. Alternatively, for example, a method of adopting the intersection between the extended line of a string when additive manufacturing head 141 is suspended from any point by the string, and the extended line of the string when additive manufacturing head 141 is suspended from another point by the string, as the gravity center position of additive manufacturing head 141, may be used.

The shortest distance between first connection part 211 and virtual plane 310 is longer than the shortest distance between second connection part 261 and virtual plane 310. The shortest distance between first connection part 211 and virtual plane 310 is the shortest distance between second connection part 261 and virtual plane 310 or less.

It can be assumed that when tool spindle 121 is swung centered on predetermined axis 104, a centrifugal force in a direction in parallel with virtual plane 310 including gravity center position G of additive manufacturing head 141 and predetermined axis 104 is applied to additive manufacturing head 141 attached to tool spindle 121 at gravity center position G of additive manufacturing head 141 as a point mass.

In this case, first connection part 211 and second connection part 261 that connect tool spindle 121 and additive manufacturing head 141 to each other are respectively arranged on the one side and the other side with virtual plane 310 intervening therebetween. Accordingly, the centrifugal force caused when tool spindle 121 is swung can be received on both the sides, with gravity center position G of additive manufacturing head 141 intervening therebetween, in a balanced manner. The weight of additive manufacturing head 141 can be received on both the sides, with gravity center position G of additive manufacturing head 141 intervening therebetween, in a balanced manner. Accordingly, during the additive manufacturing for a workpiece, additive manufacturing head 141 can be prevented from falling off tool spindle 121.

The insertion direction of pin member 233 into pin insertion hole 222 is the Y-axis direction in parallel with predetermined axis 104. According to such a configuration, the direction of the centrifugal force caused when tool spindle 121 is swung, and the insertion direction of pin member 233 into pin insertion hole 222 have an orthogonal relationship. Accordingly, during the additive manufacturing for a workpiece, additive manufacturing head 141 can be more securely prevented from falling off tool spindle 121.

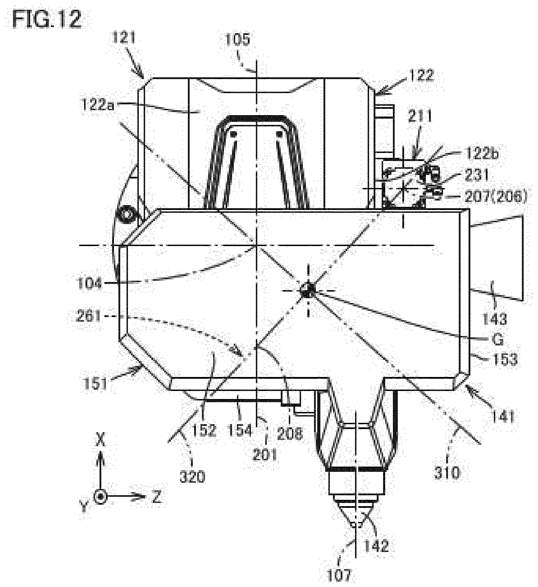

Fig. 12 is a front view showing a modification example of the tool spindle and the additive manufacturing head in Fig. 3. Referring to Fig. 12, according to this modification example, in view of tool spindle 121 and additive manufacturing head 141 in the axial direction of predetermined axis 104, gravity center position G of additive manufacturing head 141 is disposed on a virtual line 320 connecting first connection part 211 and second connection part 261 to each other and is disposed between first connection part 211 and second connection part 261.

At first connection part 211, virtual line 320 is on central axis 207 of pin member 233 (central axis 206 of pin insertion hole 222). At second connection part 261, virtual line 320 is on any point 208 on an inner circumferential side of a contact part between taper surface 125c and taper surface 156d, axially on rotation central axis 105 corresponding to central axis of tool insertion hole 125.

According to such a configuration, the centrifugal force caused when tool spindle 121 is swung can be received in a balanced manner on both the sides with gravity center position G of additive manufacturing head 141 intervening therebetween. Accordingly, during the additive manufacturing for a workpiece, additive manufacturing head 141 can be more securely prevented from falling off tool spindle 121.

The structure of processing machine 100 in the embodiment of the present invention described above is summarized as follows. Processing machine 100 in this embodiment includes: tool spindle 121 as a tool holding part that is provided swingably centered on predetermined axis 104 in parallel with a horizontal direction, and is for holding a tool for subtractive manufacturing for a workpiece; additive manufacturing head 141 as a work head that is detachably attached to tool spindle 121, and performs work on the workpiece; first connection part 211 that is provided for tool spindle 121 and additive manufacturing head 141, and connects tool spindle 121 and additive manufacturing head 141 to each other; and second connection part 261 that is provided for tool spindle 121 and additive manufacturing head 141, is disposed at a position apart from first connection part 211, and connects tool spindle 121 and additive manufacturing head 141 to each other. First connection part 211 is disposed on one side with respect to a virtual plane 310 that includes gravity center position G of additive manufacturing head 141 and predetermined axis 104, and second connection part 261 is disposed on the other side with respect to virtual plane 310.

According to processing machine 100 in the embodiment of the present invention having such a configuration, when the additive manufacturing is performed for a workpiece by additive manufacturing head 141 attached to tool spindle 121, additive manufacturing head 141 can be prevented from falling off tool spindle 121.

Note that the work head according to the present invention is not limited to additive manufacturing head 141, and may be, for example, a head for laser processing used for workpiece laser processing, or a head for measurement that includes a probe for measuring a workpiece. The tool holding part in the present invention is not limited to the tool spindle, and may be, for example, a tool rest for holding the fixed tool.

The embodiment disclosed here is described as an example in all respects, and should not be construed to be limitative. The scope of the present invention is not indicated by the above description but is indicated by the claims. It is intended to encompass equivalent meanings of the claims, and all modifications in the range.

### INDUSTRIAL APPLICABILITY

The present invention is applied to, for example, a processing machine that can perform the subtractive manufacturing and additive manufacturing for a workpiece.

### REFERENCE SIGNS LIST

100 Processing machine; 101, 102, 105, 108 Rotation central axis; 104 Predetermined axis; 106 Swing central axis; 107 Optical axis; 111 First workpiece spindle; 116 Second workpiece spindle; 121 Tool spindle; 122 Exterior body; 122a First side surface; 122b Second side surface; 123 Spindle end face; 124 Spindle main body; 125 Tool insertion hole; 125c, 156d Taper surface; 131 Tool rest; 132 Swing part; 136 Bed; 141 Additive manufacturing head; 142 Laser tool; 143 Cable guide part; 146 Cable; 151 Head main body; 152 First side part; 153 Second side part; 154 Bottom part; 156 Shank part; 156e Shank end face; 157 Cylinder cover; 160 Machining area; 161 Storage area; 166 Cover body; 167 Inner cover; 168 Opening part; 169 Opening and closing cover; 170 Head stocker; 171 Head holding part; 172 Base; 176 Cable support part; 177 Pulley part; 181 Head stocker support stage; 201, 206, 207 Central axis; 211 First connection part; 221 Block body; 222 Pin insertion hole; 231 Piston cylinder; 232 Guide block; 233 Pin member; 242 Cylinder block; 243 Piston; 261 Second connection part; 271 Tool clamp mechanism; 272 Drawbar; 273 Collet; 274 Spring member; 281 Concave part; 310 Virtual plane; 320 Virtual line; G Gravity center position.

## Claims

1. A processing machine, comprising:
a tool holding part that is provided swingably centered on a predetermined axis in parallel with a horizontal direction, and is for holding a tool for subtractive manufacturing for a workpiece;
a work head that is detachably attached to the tool holding part, and performs work on the workpiece;
a first connection part that is provided for the tool holding part and the work head, and connects the tool holding part and the work head to each other; and
a second connection part that is provided for the tool holding part and the work head, is disposed at a position apart from the first connection part, and connects the tool holding part and the work head to each other,
wherein the first connection part is disposed on one side with respect to a virtual plane that includes a gravity center position of the work head and the predetermined axis, and the second connection part is disposed on the other side with respect to the virtual plane.

2. The processing machine according to claim 1, wherein in view of an axial direction of the predetermined axis, the gravity center position of the work head is disposed on a virtual line connecting the first connection part and the second connection part to each other and is disposed between the first connection part and the second connection part.

3. The processing machine according to claim 1 or 2,
wherein one of the tool holding part and the work head is provided with a pin insertion hole,
the other of the tool holding part and the work head is provided with a pin member that is inserted into the pin insertion hole and forms the first connection part together with the pin insertion hole when the work head is attached to the tool holding part, and
an insertion direction of the pin member into the pin insertion hole is in parallel with the predetermined axis.

4. The processing machine according to any one of claims 1 to 3,
wherein the tool holding part is provided with a tool insertion hole into which a tool is inserted,
the tool holding part includes a tool clamp mechanism for clamping the tool inserted into the tool insertion hole, and
the work head is provided with a shank part that is inserted into the tool insertion hole, is clamped by the tool clamp mechanism, and forms the second connection part together with the tool insertion hole, when the work head is attached to the tool holding part.

5. The work machine according to any one of claims 1 to 4, wherein the work head is an additive manufacturing head that emits laser light while discharging material powder to the workpiece.
